# EUROPÄISCHE PATENTSCHRIFT

(11) **EP 2 178 675 B1**
(45) Veröffentlichungstag und Bekanntmachung des Hinweises auf die Patenterteilung: **07.02.2018**
(21) Anmeldenummer: 08785266.1
(22) Anmeldetag: 31.07.2008
(51) Int. Cl.: B23Q 11/00, F16F 15/36, G01M 1/04, B23B 31/26, B23B 31/113, B23B 31/40

(54) **SCHNELLWECHSELSYSTEM**
QUICK-CHANGE SYSTEM
SYSTÈME DE MONTAGE ET DÉMONTAGE RAPIDE

(30) Priorität: 02.08.2007 DE 102007036144
(43) Veröffentlichungstag der Anmeldung: 28.04.2010
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Bockhorni & Kollegen
(86) Internationale Anmeldenummer: PCT/EP2008/006325
(87) Internationale Veröffentlichungsnummer: WO 2009/043407

(56) Entgegenhaltungen:
- EP-A- 0 901 858
- EP-A1- 0 919 312
- WO-A-00/45983
- DE-U1- 20 320 068
- GB-A- 568 225
- US-A- 1 781 442
- US-A- 2 926 020
- US-A- 4 563 116
- US-A- 4 775 269
- US-A- 5 201 621
- US-A- 5 322 304
- US-A- 5 595 391
- US-A1- 2005 163 559
- US-B1- 6 273 080

## Beschreibung

Die Erfindung betrifft eine Spannvorrichtung zum Spannen eines Werkstücks an einer rotierenden Spindel einer Werkzeugmaschine- und insbesondere an einer Auswuchtmaschine - nach dem Oberbegriff des Anspruchs 1.

Eine gattungsgemäße Spannvorrichtung ist aus dem deutschen Gebrauchsmuster DE 299 80 181U bekannt. Die bekannte Spannvorrichtung besteht aus einem Grundkörper bzw. einer Grundkörpereinheit mit einer zur Spindel zentrischen Aufnahmeöffnung, in die ein Kupplungsschaft des Werkstücks von einem Stirnende her axial einsteckbar ist. Dieser Kupplungsschaft ist regelmäßig ein entsprechender Abschnitt eines Werkzeughalters bzw. eines Werkzeugspannfutters.

Generell, aber auch insbesondere dort, wo die Spannvorrichtung Bestandteil einer Auswuchtmaschine ist, werden hohe Ansprüche an die Koaxialität zwischen dem Werkstück bzw. dem Werkzeughalter oder Werkzeugspannfutter und dem Grundkörper gestellt. Die gewünschte Koaxialität wird im Stand der Technik dadurch gewährleistet, dass der Kupplungsschaft als Zentrierkegel ausgebildet ist, der in eine dazu passende kegelige Aufnahme am Grundkörper bzw. der Grundkörpereinheit hineingezogen wird. Im besagten Stand der Technik werden der Zentrierkegel und die dazu passende kegelige Aufnahme als Passflächen bezeichnet.

Es ist so, wie der Begriff "Passfläche" schon besagt - um auf diese Art und Weise mit der gewünschten Genauigkeit zentrieren zu können, müssen der Zentrierkegel des Kupplungsschafts und die ihm zugeordnete kegelige Aufnahme recht genau toleriert sein, damit sich der Zentrierkegel und ihm zugeordnete kegelige Aufnahme "satt" aneinander anschmiegen. Größere Toleranzen und insbesondere Winkelabweichungen führen zu Störungen und sind daher nicht zulässig.

Das bedeutet jedoch, dass nur Werkstücke, die einen bestimmten, eng tolerierten Kupplungsschaft aufweisen, mittels ein und derselben Grundkörpereinheit gespannt werden können. So weit Werkstücke mit einem etwas anderen Kupplungsschaft gespannt werden sollen, wird es erforderlich die Grundkörpereinheit gegen eine andere Grundkörpereinheit auszutauschen, die ihrerseits eine dazu passende kegelige Aufnahme aufweist. Hierzu muss die eine Grundkörpereinheit von der Hohlspindel abgeschraubt werden und die andere Grundkörpereinheit an der Hohlspindel angeschraubt werden. Es versteht sich von allein, dass dies einen erheblichen Aufwand verursacht.

Angesichts dessen ist es Aufgabe der Erfindung eine Möglichkeit aufzuzeigen, wie man ohne Austausch der Grundkörpereinheit Werkstücke mit den verschiedensten Kupplungsschäften oder gar Zentrierbohrungen spannen kann.

Diese Aufgabe wird mit den Merkmalen des Anspruchs 1 gelöst. Die Erfindung bietet die Möglichkeit nun nicht mehr jedes Mal die Grundkörpereinheit oder den Grundkörper abmontieren zu müssen, wenn ein Werkstück mit einem anderen Kupplungsschaft oder einer anderen Zentrierbohrungen gespannt werden soll. Statt dessen genügt es den Wechselkörper gegen einen anderen Wechselkörper auszutauschen, der seinerseits an das andere Werkstück angepasst ist, was mit der beschriebenen Art der Kupplung sehr einfach und präzise möglich ist.

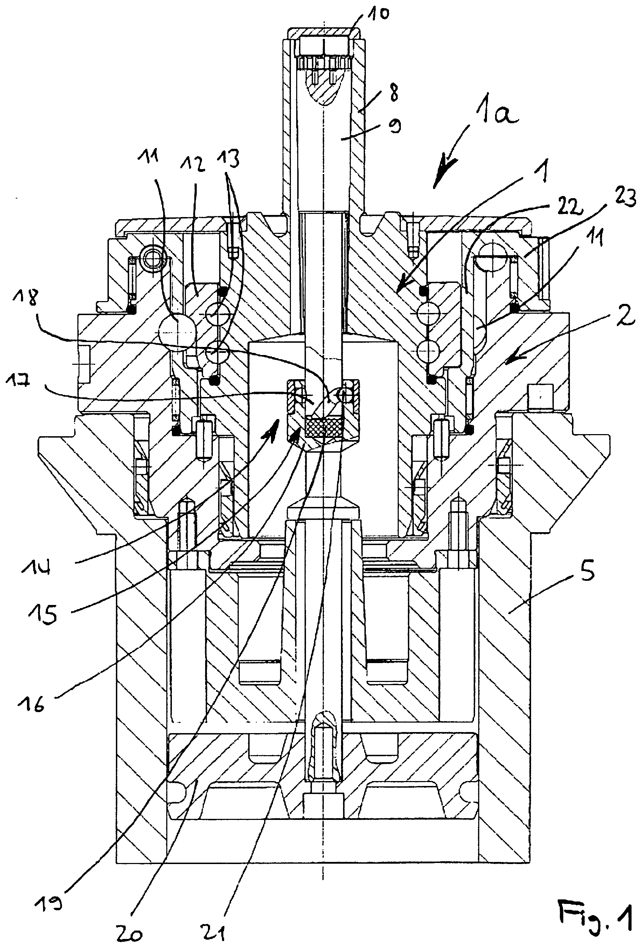

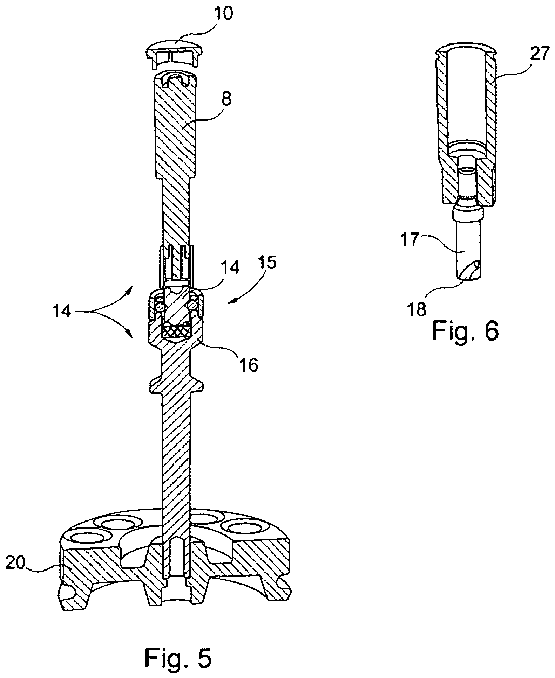

Weitere Ausgestaltungsmöglichkeiten, Wirkungsweisen und Vorteile der Erfindung ergeben sich aus der nachfolgenden Beschreibung der Ausführungsbeispiele, die anhand der Figuren 1 bis 6 erfolgt.

Die Figur 1 zeigt ein erstes Ausführungsbeispiel der erfindungsgemäßen Spannvorrichtung 1 a in vollständig zusammengebautem Zustand. Eine solche Spannvorrichtung dient insbesondere dazu, um auszuwuchtende Werkstücke, etwa Bohrer, Fräser oder dergleichen an einer Auswuchtmaschine zu spannen. Die Spannvorrichtung 1 a besteht aus einem mehrteiligen Wechselkörper 1 und einem ebenfalls mehrteiligen Grundkörper 2. Der Grundkörper 2 ist in eine Hohlspindel 5 eingesetzt. Er wird an der Hohlspindel 5 mittels einer hier nur angedeuteten Verschraubung 7 lösbar befestigt.

Der Wechselkörper 1 trägt bei der hier gezeigten Ausführungsform eine noch näher zu erläuternde Konuskupplung, die hier aus einer Spannhülse 8 und einem Spannkonus 9 besteht. Die Konuskupplung dient dazu, um den Wechselkörper 1 mit dem Werkstück, welches rotierend an der Spindel der Werkzeugmaschine befestigt werden soll, zu verbinden. Das Werkstück kann ein Werkzeugspannfutter bzw. ein Werkzeughalter sein. Diese Spannhülse 8 kann beispielsweise in eine Bohrung eines Werkstücks eingeführt und in dieser Bohrung verspannt werden. Zu diesem Zweck ist die Spannhülse 8 so gestaltet (im Regelfall geschlitzt), dass sie mittels eines Spannkonus 9 aufgeweitet werden kann. Auf diese Art und Weise ist das Werkstück dann an der Hohlspindel 5 einer hier nicht gezeigten Werkzeugmaschine befestigt und kann von der Hohlspindel 5 in Rotation versetzt werden. Statt der hier gezeigten Spannhülse 8 kann der Wechselkörper 1 mit einer Spannhülse versehen sein, in die eine Spannzange eingesetzt ist, mittels derer der Schaft eines Werkstücks eingespannt werden kann, in dem die Spannhülse die Spannzange zusammenrückt, sobald die Spannzange in die Spannhülse eingezogen wird.

Der Wechselkörper 1 kann von dem Grundkörper 2 abgekoppelt und abgenommen werden, um ihn gegen einen entsprechenden anderen Wechselkörper auszuwechseln. Dies ist zweckmäßig, um die Spannvorrichtung schnell mit einer anderen Konuskupplung ausstatten zu können. Auf diese Art und Weise lässt sich sehr schnell vom Spannen eines Werkstücks an seiner zu diesem Zweck vorgesehenen Zentrierbohrung zum Spannen eines anderen Werkstücks an seinem Schaft übergehen. Gleichzeitig lässt sich auf diese Art und Weise sehr schnell dazu übergehen, ein anderes Werkstück mit einem gänzlich anderen Durchmesser zu spannen. All dies ist möglich, ohne jeweils erst den Grundkörper von der Hohlspindel 5 abschrauben und gegen einen anderen Grundkörper austauschen zu müssen.

Ein entscheidender Aspekt der Erfindung ist die Art und Weise, wie der jeweilige Wechselkörper 1 koaxial mit dem Grundkörper 2 verbunden und spielfrei gegen den Grundkörper 2 verspannt werden kann.

Dies erfolgt mittels dreier Wälzkörper 11, die zwischen dem jeweiligen Wechselkörper 1 und dem Grundkörper 2 angeordnet und im Wesentlichen symmetrisch entlang des Umfangs des Wechselkörpers 1 und des Grundkörpers 2 angeordnet sind. Im vorliegenden Fall schließen die Wälzkörper 11 untereinander jeweils einen Winkel von 120 Grad ein. Es können auch mehr, als die hier gezeigten drei Wälzkörper vorgesehen sein. Weniger als die gezeigten drei Wälzkörper sollten zweckmäßigerweise nicht vorgesehen werden, da sich sonst nicht zuverlässig und erst recht nicht nahezu reibungsfrei eine wirklich koaxiale Verspannung zwischen dem Wechselkörper 1 und dem Grundkörper 2 herstellen lässt.

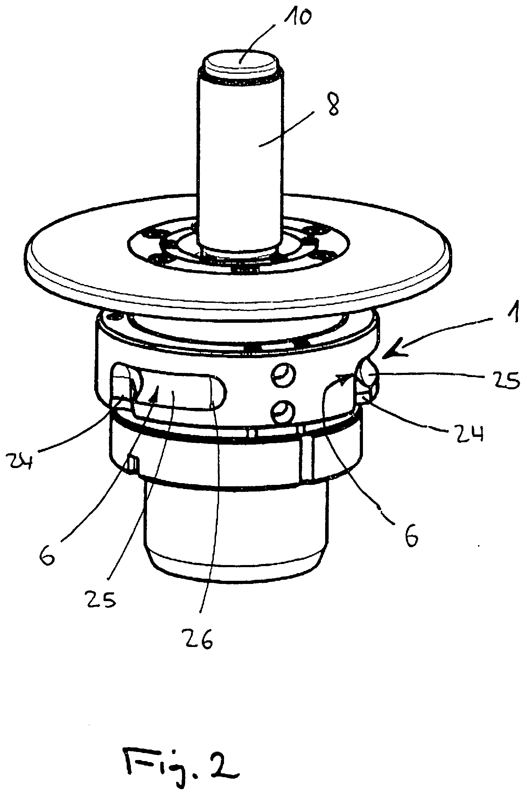

Um die gewünschte Verspannung herstellen zu können, ist hier jeder der Wälzkörper 11 in einer am Wechselkörper 1 ausgebildeten Nut 6 angeordnet, wie sie die Figur 2 zeigt. Erläuternd sei angemerkt, dass die Figur 2 den Wechselkörper 1 in vom Grundkörper 2 abgenommen Zustand zeigt. Die besagte Nut im Wechselkörper 1 führt mit ihren Nutflanken den jeweils von ihr aufgenommenen Wälzkörper 11. Auch auf der Seite des Grundkörpers 2 läuft der jeweilige Wälzkörper 11 in einer Nut, so, wie das auf der linken Seite der Figur 1 zu erkennen ist. Auf diese Art und Weise werden der Wechselkörper 1 und der Grundkörper 2 positionsgenau aneinander gehalten, auch in axialer Richtung.

Die Nut 6 besitzt einen Ansatzbereich 24, in dem die gedachte Nutachse bzw. die Mittellinie der Nut im Wesentlichen in Richtung der gemeinsamen Drehachse des Grundkörpers 2 und des Wechselkörpers 1 verläuft. In diesen Ansatzbereich 24 kann der Wälzkörper 11 eingeführt werden, indem die Nut 6 auf den Wälzkörper 11 in axialer Richtung aufgeschoben wird, bzw. umgekehrt. An den besagten Ansatzbereich 24 schließt sich ein Umfangsbereich 25 der Nut an, in dem die gedachte Nutachse bzw. die Mittellinie der Nut im Wesentlichen in Richtung des Umfangs des Grundkörpers bzw. des Wechselkörpers verläuft. In dem von den Figuren gezeigten Ausführungsbeispiel ist es sogar so, dass die gedachte Nutachse im Umfangsbereich der Nut genau in Richtung des Umfangs des Grundkörpers 2 bzw. des Wechselkörpers 1 verläuft.

Dabei ist die Nut 6 so ausgestaltet, dass sie einen Keilspalt bildet. Das heißt nichts anderes, als dass die Tiefe der Nut 6 zu ihrem Ende 26 hin abnimmt. Vorzugsweise ist es sogar so, dass die Tiefe der Nut 6 bereits in ihrem Ansatzbereich 24 abnimmt. Hierdurch wird sichergestellt, dass es sofort zu einer definierten Reibung zwischen dem Wälzkörper 11 und der Nut 6 am Wechselkörper 1 sowie der anderen Nut am Grundkörper 2 kommt, sobald der Wälzkörper 11 in den Ansatzbereich 24 der Nut eingeführt worden ist. Jedenfalls nimmt die Tiefe der Nut 6 entlang ihres Umfangsbereichs 25 ab. Die Gestaltung der Nut 6 am Wechselkörper 1 und der Nut am Grundkörper 2 ist in Abstimmung auf den Wälzkörper 11 so gewählt, dass der Wälzkörper 11 sowohl auf der Seite des Wechselkörpers 1 als auch auf der Seite des Grundkörpers 2 im Wesentlichen (vorzugsweise vollständig) abrollt, wenn der Wälzkörper 11 tiefer in die Nut 6 hineingeschoben wird (in Richtung des Endes 26 der Nut). Da die Nut 6, wie gesagt, einen Keilspalt bildet, verspannt der Wälzkörper 11 den Wechselkörper 1 und den Grundkörper 2 immer stärker miteinander, desto weiter der Wälzkörper 11 in die Nut 6 hineingeschoben wird.

Dadurch, dass die Tiefe der Nut 6 auch in ihrem Umfangsbereich abnimmt, wird auch eine Sicherung des Wechselkörpers 1 und des Grundkörpers 2 gegen Verdrehen relativ zueinander bewerkstelligt.

Durch das Ende 26 der Nut 6 wird auch eine Sicherung des Wechselkörpers 1 und des Grundkörpers 2 gegen Verdrehen relativ zueinander bewerkstelligt, nämlich durch Formschluss (soweit die Tiefe der Nut 6 in ihrem Umfangsbereich 25 nicht immer weiter abnimmt).

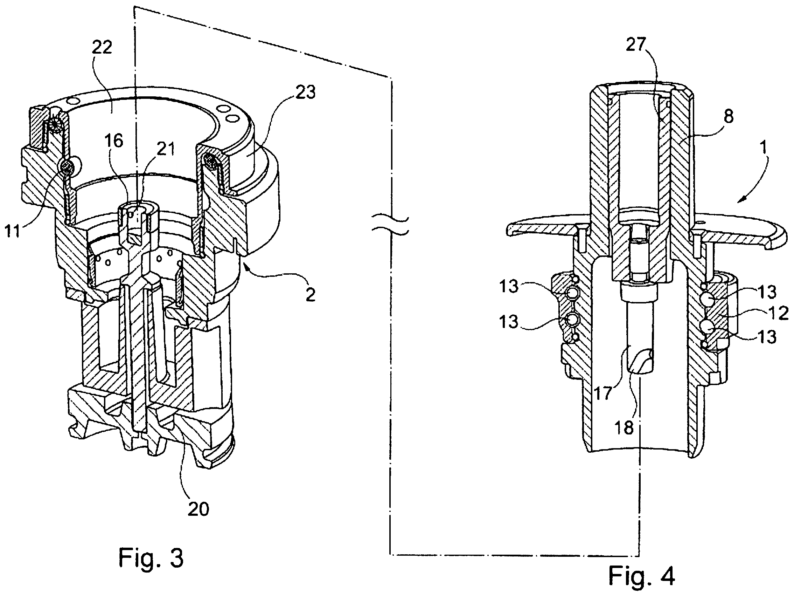

Wie am Besten anhand der Figur 3 zu erkennen ist, die den Grundkörper 2 bei abgenommenem Wechselkörper 1 zeigt, sind die Wälzkörper 11 in einem Käfig 22 gehalten, aus dem sie sowohl auf der Seite des Wechselkörpers 1 als auch auf der Seite des Grundkörpers 2 herausragen. Der Käfig 22 ist dabei so ausgestaltet, dass er einen Kragen 23 besitzt, der außerhalb des Spalts zwischen dem Grundkörper 2 und dem Wechselkörper 1 liegt und der von außen gegriffen und verdreht werden kann.

Durch Drehung des Käfigs 22 können die Wälzkörper 11 in Richtung des Endes der Nut in ihre jeweilige Nut 6 hineingerollt werden. Durch Drehung des Käfigs 22 in die entgegengesetzte Richtung können die Wälzkörper 11 in Richtung des Ansatzbereichs ihrer jeweiligen Nut aus der Nut herausgerollt werden. Bei der hier gezeigten Ausführungsform ist dies jeweils möglich, ohne den Grundkörper 2 oder den eigentlichen (das heißt den gesamten) Wechselkörper 1 verdrehen zu müssen. Zu diesem Zweck ist die Nut 6 jeweils nicht unmittelbar in den eigentlichen Wechselkörper 1 eingearbeitet, sondern in einem Zwischenring 12, der mittels eines Kugellagers nahezu reibungslos auf dem eigentlichen Wechselkörper 1 gelagert ist, vgl. Figur 4, die einen Schnitt durch den Wechselkörper 1 entlang seiner Rotationsachse zeigt. Das besagte Kugellager ist hier in der Form eines zweireihigen Rillenkugellagers ausgeführt, welches den Zwischenring 12 nicht nur drehbar, sondern auch in Position hält. Es ist leicht einzusehen, dass der Zwischenring 12 rotiert, sobald die Wälzkörper 11 durch Drehung des Käfigs 22 in die Nut 6 hinein oder aus der Nut 6 herausgerollt werden und dabei auf dem Zwischenring 12 abwälzen. Die auf diese Art und Weise mittels der Wälzkörper 11 und der Nut realisierte Kupplung ist also ausgesprochen leichtgängig. Nirgendwo tritt Reibung auf, die verhindern könnte, dass der Wechselkörper 1 und der Grundkörper 2 durch die Wälzkörper 11 in eine genau koaxiale Position zueinander gezwungen und gegeneinander verspannt werden. Zugleich lässt sich die Kupplung mit minimalem Kraftaufwand bedienen.

Der Vollständigkeit halber sei angemerkt, dass es theoretisch möglich ist, die Nut 6 mit einer konstanten Tiefe zu versehen und den Keilspalt dadurch zu realisieren, dass die Tiefe der Nut am Grundkörper 2 variabel ist (in den Figuren nicht gezeigt). Die zunächst beschriebene und von den Figuren gezeigte Variante, dass die Tiefe der Nut 6 variabel ist, ist vorzuziehen, weil es dann keine Vorzugsposition gibt, die man beim Zusammenfügen des Wechselkörpers 1 und des Grundkörpers 2 beachten müsste, um den gewünschten Effekt zu gewährleisten - abgesehen davon, dass die Kugeln 11 jeweils in den Ansatzbereich 24 der ihnen zugeordneten Nut 6 eingeführt werden müssen.

Die Figur 1 aber auch die Zusammenschau der Figuren 3, 4 und 5 zeigen einen weiteren wichtigen Aspekt der Erfindung, der insbesondere für solche Wechselkörper 1 von Bedeutung ist, die mit einer Spannzange 27 zum Einspannen eines Werkstücks an seinem hierzu vorgesehenen Schaft versehen sind - dabei zeigen nur die Figuren 3, 4 und 5 einen Wechselkörper 1, der mit einer Spannzange 27 ausgerüstet ist, während der von der Figur 1 gezeigte Wechselkörper 1 mit einem Spannkonus zur Aufweitung einer Spannhülse versehen ist, um ein Werkstück an seiner zu diesem Zweck vorgesehenen Zentrierbohrung zu spannen. Hierauf kommt es indes nicht an, da der entscheidende und nachfolgend zu erläuternde Mechanismus im Prinzip immer derselbe ist.

Die Spannzange 27 bzw. der Spannkonus 9 sind mit einem Zug-/Druckorgan 14 (nachfolgend kurz "Zugstange" genannt) versehen, das mittels eines Linearantriebs mit Zug- bzw. Druckkräften beaufschlagt wird. Der Linearantrieb ist hier in Form eines bidirektional wirkenden Pneumatikzylinders realisiert, dessen Kolben 20 mit der Zugstange 14 verbunden ist und der in der Hohlspindel 5 gleitet, die in diesem Bereich einen Zylinder bildet. Je nachdem, in welche Richtung der Kolben 20 mit Presseluft beaufschlagt wird, werden die Spannzange 27 bzw. der Spannkonus 9 tiefer in die Spannhülse 8 hineingezogen oder aus der Spannhülse 8 ausgetrieben. Auf diese Art und Weise kann die Konuskupplung aus der Spannzange 27 bzw. dem Spannkonus 9 und der Spannhülse 8 geschlossen oder geöffnet werden.

Der entscheidende Aspekt ist nun der, dass die Zugstange 14 zweiteilig ausgeführt ist und diese beiden Teile mittels der Zugstangenkupplung 15 miteinander verbunden oder voneinander getrennt werden können. Die Zugstangenkupplung besteht hier aus einer Zugstangenhülse 16 und einem Zugstangenbolzenabschnitt 17. Der Zugstangenbolzenabschnitt 17 ist mit mindestens einer Zugstangennut 18 versehen. Im konkreten Fall sind zwei Zugstangennuten in 18 vorgesehen. Dementsprechend ist die Zugstangenhülse mit zwei Vorsprüngen - hier in Form von Kugeln - versehen, die in die beiden Zugstangennuten 18 eingreifen. Die Zugstangennuten 18 sind jeweils in Form eines Bajonettverschlusses ausgebildet. Das heißt sie weisen an ihren Enden jeweils eine hier nicht gezeigte Rastfläche auf, in die sich die Kugeln einhängen, wenn der Zugstangenbolzenabschnitts 17 mit seinen Zugstangennuten 18 gegen die Kraft der Axialfeder 19 in die Zugstangenhülse 16 eingedreht wird.

Als Axialfeder kommt hier eine kompressible Elastomer-Lage zum Einsatz. Stattdessen kann aber genauso gut beispielsweise eine Schraubenfeder verwendet werden.

Wichtig ist, dass die Spannzange 27, die Spannhülse 8 und die Zugstange 14 in Abstimmung auf den Hub des Kolbens 20 so dimensioniert sind, dass die Spannzange 27 in gelöstem Zustand soweit freikommt, dass sich die Kupplung betätigen lässt und möglichst zugleich so weit freikommt, dass sie ein Stück weit nach oben aus der Spannhülse 8 übersteht. Nämlich so weit, dass die Spannzange 27 ergriffen, gedreht und ggf. eingedrückt bzw. herausgezogen werden kann, um auf diese Art und Weise die Zugstangenkupplung 15 zu lösen oder in Eingriff zu bringen.

Die Zugstangenkupplung 15 ermöglicht es, den Wechselkörper 1 unter Verbleib des Kolbens 20 am Grundkörper 2 auszubauen und vermeidet daher unnötigen Aufwand in dem Sinne, dass jeder Wechselkörper 1 mit einem eigenen Kolben 20 bzw. einem eigenen Linearantrieb für die Spannzange 27 bzw. dem Spannkonus 9 ausgerüstet sein muss. Ein weiterer wichtiger Vorteil der Zugstangenkupplung 15 liegt darin, dass es möglich wird, die Spannzange 27 ohne Ausbau des Wechselkörpers 1 von dem Grundkörper 2 und dem Wechselkörper 1 zu trennen, auszubauen und gegen eine Spannzange mit einem anderen Spanndurchmesser zu ersetzen. Auf diese Art und Weise lässt sich die erfindungsgemäße Spannvorrichtung besonders flexibel an die verschiedenen Werkstücke anpassen.

Am Rande ist festzuhalten, dass die Zugstangenkupplung 15 nicht zwingend als Bajonettkupplung ausgeführt werden muss. Vielmehr lässt sich die Kupplung zum Beispiel auch als reguläres Schraubgewinde ausführen, bei dem der Zugstangenbolzenabschnitt 17 in ein entsprechendes Gewinde der Zugstangenhülse 16 eingeschraubt wird. Zweckmäßiger ist allerdings eine Bajonettkupplung, weil sie sich mit wenigen Bewegungen öffnen und schließen lässt.

### Bezugszeichenliste

- (1a): Spannvorrichtung
- (1): Wechselkörper
- (2): Grundkörper
- (3): Nicht vergeben
- (4): Nicht vergeben
- (5): Polspindel
- (6): Nut
- (7): Verschraubung
- (8): Spannhülse
- (9): Spannkonus
- (10): Deckel
- (11): Wälzkörper
- (12): Zwischenring
- (13): Zwischenringwälzlager
- (14): Zugstange
- (15): Zugstangenkupplung
- (16): Zugstangenhülse
- (17): Zugstangenbolzenabschnitt
- (18): Zugstangennut
- (19): Axialfeder
- (20): Kolben
- (21): Zugstangenwälzkörper
- (22): Käfig
- (23): Kragen des Käfigs
- (24): Ansatzbereich der Nut
- (25): Umfangsbereich der Nut
- (26): Nutende
- (27): Spannzange

## Patentansprüche

1. Spannvorrichtung (1a) zum Spannen eines Werkstücks an einer rotierenden Spindel einer Werkzeugmaschine oder einer Auswuchtmaschine, wobei die Spannvorrichtung einen Grundkörper (2), der bestimmungsgemäß fest mit der Spindel verbunden werden kann, aufweist, **gekennzeichnet durch** mindestens einen an den Grundkörper (2) an- und abzukuppelnden Wechselkörper (1) für das Werkstück, wobei das Werkstück an dem Wechselkörper (1) spannbar ist, wobei der Wechselkörper (1) und der Grundkörper (2) in vollständig angekuppeltem Zustand durch Wälzkörper (11) koaxial zueinander gehalten und in radialer Richtung gegeneinander verspannt werden, wobei jeder der Wälzkörper (11)
- in einem Spalt zwischen dem Grundkörper (2) und dem Wechselkörper (1) oder
- in einem Spalt zwischen dem Grundkörper (2) und einem Ring (12), der drehbeweglich, mittels eines Wälzlagers (13), auf dem eigentlichen Wechselkörper (1) gelagert ist,
angeordnet ist, und wobei der Spalt derart als Keilspalt in Form einer lokalen Nut (6), mit einer zum Ende hin abnehmenden Tiefe der Nut (6), die mindestens einen Wälzkörper (11) aufnimmt, ausgebildet und auf den jeweiligen Wälzkörper (11) abgestimmt ist, dass der jeweilige Wälzkörper im Zuge des Miteinanderverbindens von Grundkörper (2) und Wechselkörper (1) so den Keilspalt entlang, tiefer in den Keilspalt hinein bewegt werden kann, dass die gewünschte Verspannung in radialer Richtung entsteht.

2. Spannvorrichtung nach Anspruch 1, **dadurch gekennzeichnet, dass** der betreffende Keilspalt und der ihm zugeordnete Wälzkörper (11) so aufeinander abgestimmt sind, dass der Wälzkörper (11) beim Eintreiben in den Spalt sowohl auf der Seite des Wechselkörpers (1) oder des Werkzeughalters als auch auf der Seite des Grundkörpers (2) abrollt.

3. Spannvorrichtung nach einem der vorhergehenden Ansprüche, **dadurch gekennzeichnet, dass** zumindest eine Seite des betreffenden Keilspalts als in radialer Richtung nachgiebiges Federelement ausgebildet ist.

4. Spannvorrichtung nach einem der vorhergehenden Ansprüche, **dadurch gekennzeichnet, dass** der betreffende Keilspalt so gestaltet ist, dass der Wälzkörper (11) auch die Relativbeweglichkeit zwischen dem Grundkörper (2) und dem Wechselkörper (1) in zumindest einer Umfangsrichtung begrenzt.

5. Spannvorrichtung nach Anspruch 4, **dadurch gekennzeichnet, dass** der Keilspalt in Form der lokalen Nut (6) einen Ansatzbereich (24) zur Einführung eines Wälzkörpers (11) von außerhalb der Nut (6) in die Nut (6) hat, in dem die Nutachse im Wesentlichen in Richtung der gemeinsamen Drehachse des Grundkörpers (2) und des Wechselkörpers (1) verläuft und einen sich daran anschließenden Umfangsbereich (25), in dem die Nutachse in Richtung des Umfangs des Grundkörpers (2) bzw. Wechselkörpers (1) verläuft.

6. Spannvorrichtung nach Anspruch 5, **dadurch gekennzeichnet, dass** die Nut (6) sowohl in ihrem Ansatzbereich (24) als auch in ihrem Umfangsbereich (25) eine abnehmende Tiefe besitzt und damit, in vom Ansatzbereich (24) her kommender Richtung gesehen, zunehmende Keilwirkung entfaltet.

7. Spannvorrichtung nach Anspruch 5 oder 6, **dadurch gekennzeichnet, dass** die Wälzkörper (11) in einem Lagerkäfig (22) angeordnet sind, der mit einem externen Drehmoment beaufschlagbar ist, so, dass der Lagerkäfig (22) die Wälzkörper (11) in den Keilspalt hineintreibt und/oder aus dem Keilspalt heraustreibt, wobei bevorzugt vorgesehen ist, dass der Lagerkäfig (22) einen Kragen (23) aufweist, der nach außen herausragt, in einen Bereich außerhalb des Bereichs, der zwischen dem Grundkörper (2) und dem Wechselkörper (1) liegt.

8. Spannvorrichtung nach Anspruch 7, **dadurch gekennzeichnet, dass** die eine der beiden den Keilspalt bildenden Flächen der Ring (12) ist, der drehbeweglich, regelmäßig mittels eines Wälzlagers (13), auf dem eigentlichen Grundköper (2) oder - vorzugsweise - dem eigentlichen Wechselkörper (1) gelagert ist und der sowohl relativ zum Grundkörper als auch zum Wechselkörper (1) derart drehbeweglich ist, dass sich der Ring (12) dreht, wenn die Wälzkörper (11) vom Lagerkäfig (22) angetrieben auf ihm abwälzen.

9. Spannvorrichtung nach einem der vorhergehenden Ansprüche, **dadurch gekennzeichnet, dass** der Wechselkörper (1) eine durch Axialkräfte betätigbare Reibkupplung (8, 9, 27) aufweist, mittels derer das eigentliche Werkstück, vorzugsweise ein Werkzeugspannfutter oder ein mit einem Einspannschaft oder einer Einspannbohrung versehenes Werkzeug, an dem Wechselkörper spannbar ist, wobei die Reibkupplung (8, 9, 27) vorzugsweise eine Konuskupplung mit einer Spannzange (27) oder einem Spannkonus (9) ist, die bzw. der mittels eines Zug-/Druckorgans (14) von einem zumindest teilweise in den Grundkörper integrierten Linearantrieb (20), vorzugsweise in Form eines Pneumatikzylinders, gegen eine am Wechselkörper (1) ausgebildete Spannhülse (8) verschoben wird.

10. Spannvorrichtung nach Anspruch 9, **dadurch gekennzeichnet, dass** das Zug-/Druckorgan (14) zwei Teile umfasst, die ihrerseits mittels einer Kupplung (15) miteinander verbunden und voneinander getrennt werden können.

11. Spannvorrichtung nach Anspruch 10, **dadurch gekennzeichnet, dass** der Bereich, in dem der Grundkörper (2) und der Wechselkörper (1) mittels der Wälzkörper (11) koaxial und unter radialer Verspannung aneinander angekuppelt sind, einen inneren Hohlraum aufweist, der von dem Zug-/Druckorgan (14) durchgriffen wird, wobei der Hohlraum vorzugsweise die Kupplung (15) des Zug-/Druckorgans (14) aufnimmt.

12. Spannvorrichtungssystem mit einer Spannvorrichtung nach einem der vorhergehenden Ansprüche, **dadurch gekennzeichnet, dass** mindestens ein Grundkörper (2) und eine Mehrzahl von Wechselkörpern (1) vorgesehen sind, die bedarfsweise mit dem mindestens einen Grundkörper (2) verbindbar sind.

## Claims

1. A clamping device (1a) for clamping a work piece at a rotating spindle of a machine tool or a balancer, wherein the clamping device comprises a base body (2), which is configured to be fixable at the spindle, **characterized by** at least one change body (1) for the work piece which can be coupled to and decoupled from the base body (2), wherein the work piece can be clamped to the change body (1), wherein the change body (1) and the base body (2) are supported coaxially relative to one another and clamped against each other in radial direction by roller elements (11) when being in a fully clamped state, wherein each of the roller elements (11) is disposed
- in a gap between the base body (2) and the change body (1) or
- in a gap between the base body (2) and a ring (12), which is supported rotatably through a rolling bearing (13) at the actual change body (1),
and wherein the gap is configured as a wedge shaped gap in form of a local groove (6) with a decreasing depth of the groove (6) at its end portion which receives at least one rolling element (11), and is configured and adapted to the respective rolling element (11), so that the respective rolling element can be moved along the wedge shaped gap, deeper into the wedge shaped gap, when the base body (2) and the change body (1) are connected to one another, so that the desired clamping is provided in radial direction.

2. The clamping device according to claim 1, **characterized in that** the respective wedge shaped gap and the associated roller element (11) are adapted to one another, so that the roller element (11) rolls on the side of the change body (1) or the tool holder and also on the side of the base body (2) when the roller element (11) is driven into the gap.

3. The clamping device according to one of the preceding claims, **characterized in that** at least one side of the respective wedge shaped gap is configured as a spring element which is flexible into radial direction.

4. The clamping device according to one of the preceding claims, **characterized in that** the respective wedge shaped gap is configured such that the rolling element (11) also limits the relative movability between the base body (2) and the change body (1) at least in one circumferential direction.

5. The clamping device according to claim 4, **characterized in that** the wedge shaped gap in form of a local groove (6) comprises an onset portion (24) for inserting a roller element (11) from outside of the groove (6) into the groove (6), in which onset portion the groove axis extends substantially in the direction of the common rotation axis of the base body (2) and of the change body (1), and comprises a circumferential portion (25), connected to the onset portion (24), in which the groove axis extends in the direction of the circumference of the base body (2) or the change body (1), respectively.

6. The clamping device according to claim 5, **characterized in that** the groove (6) comprises a decreasing depth in its onset portion (24) and also in its circumferential portion (25), thus providing an increasing wedge effect in a direction oriented away from the onset portion (24).

7. The clamping device according to claim 5 or 6, **characterized in that** the rolling element (11) is arranged in a bearing cage (22) which can be loaded with an external torque, so that the bearing cage (22) drives the roller elements (11) into the wedge shaped gap, and/or drives them out of the wedge shaped gap, wherein preferably, the bearing cage (22) comprises a collar (23) which protrudes outward into a portion which is disposed outside of the portion which is disposed between the base body (2) and the change body (1).

8. The clamping device according to claim 7, **characterized in that** one of the two surfaces forming the wedge shaped gap is the ring (12), which is rotatable, regularly by means of a rolling bearing (13) at the actual base body (2) or - preferably - the actual change body (1) and which is rotatable relative to the base body and also relative to the change body (1), so that the ring (12) rotates when the roller elements (11) roll on it when they are driven by the bearing cage (22).

9. The clamping device according to one of the preceding claims, **characterized in that** the change body (1) comprises a friction clutch (8, 9, 27), which can be actuated through axial forces, through which friction clutch the actual work piece, preferably the tool chuck or a tool which is provided with a clamping shank or a clamping bore, can be clamped at the change body, wherein the friction clutch (8, 9, 27) is a cone clutch with a chuck (27) or a clamping cone (9), which is moved through a tension-/ compression device (14) by a linear drive (20) which is integrated at least partly into the base body, preferably in form of a pneumatic cylinder, against a clamping sleeve (8) configured at the change body (1).

10. The clamping device according to claim 9, **characterized in that** the tension-/ compression device (14) comprises two components, which in turn can be connected to one another and separated from one another through a coupling (15).

11. The clamping device according to claim 10, **characterized in that** the portion in which the base body (2) and the change body (1) are coupled coaxially to one another and through radial clamping through roller elements (11) comprises an inner cavity, through which the tension/-compression device (14) reaches, wherein the cavity preferably receives the coupling (15) of the tension/-compression device (14)..

12. A clamping device system with a clamping device according to one of the preceding claims, **characterized in that** at least one base body (2) and a plurality of change bodies (1) are provided, which can be connected to at least one base body (2) as required.

## Revendications

1. Dispositif de serrage (1a) pour le serrage d'une pièce sur une broche rotative d'une machine-outil ou une machine à équilibrer, dans lequel le dispositif de serrage comprend un corps de base (2) qui, conformément à la destination, peut être solidarisé à la broche, **caractérisé par** au moins un corps interchangeable (1) pour la pièce qui est à coupler au et à désaccoupler du corps de base (2), dans lequel la pièce peut être serrée sur ledit corps interchangeable (1), dans lequel, lorsqu'ils sont entièrement couplés, le corps interchangeable (1) et le corps de base (2) sont maintenus de manière coaxiale l'un par rapport à l'autre et serrés dans la direction radiale l'un contre l'autre par des corps roulants (11), chacun des corps roulants (11) étant disposé
- dans une fente entre le corps de base (2) et le corps interchangeable (1), ou
- dans une fente entre le corps de base (2) et un anneau (12) qui est logé de manière mobile en rotation, au moyen d'un palier à roulement (13), sur le corps interchangeable (1) proprement dit, et dans lequel la fente est réalisée de telle manière en tant que fente en coin sous forme d'une rainure locale (6), la profondeur de la rainure (6) qui reçoit au moins un corps roulant (11) diminuant vers le bout, et est accordée au corps roulant (11) respectif de telle manière que, au cours de l'assemblage du corps de base (2) et du corps interchangeable (1), le corps roulant (11) respectif peut être déplacé le long de la fente en coin, plus profondément dans la fente en coin, de manière à produire le serrage souhaité dans le sens radial.

2. Dispositif de serrage selon la revendication 1, **caractérisé par le fait que** la fente en coin respective et le corps roulant (11) qui lui est associé sont accordés l'un à l'autre de telle manière que le corps roulant (11), lorsqu'il est enfoncé dans la fente, roule aussi bien du côté du corps interchangeable (1) ou du porte-outil que du côté du corps de base (2).

3. Dispositif de serrage selon l'une quelconque des revendications précédentes, **caractérisé par le fait qu'**au moins un côté de la fente en coin respective est réalisé en tant qu'élément formant ressort qui est élastique dans le sens radial.

4. Dispositif de serrage selon l'une quelconque des revendications précédentes, **caractérisé par le fait que** la fente en coin respective est configurée de telle sorte que le corps roulant (11) délimite également la mobilité relative entre le corps de base (2) et le corps interchangeable (1) dans au moins une direction circonférentielle.

5. Dispositif de serrage selon la revendication 4, **caractérisé par le fait que** la fente en coin sous forme de la rainure locale (6) présente une zone d'applique (24) pour introduire un corps roulant (11) depuis l'extérieur de la rainure (6) dans la rainure (6), où l'axe de la rainure s'étend pour l'essentiel en direction de l'axe de rotation commun du corps de base (2) et du corps interchangeable (1), ainsi qu'une zone circonférentielle (25) y contiguë où l'axe de la rainure s'étend en direction de la circonférence du corps de base (2) ou bien du corps interchangeable (1).

6. Dispositif de serrage selon la revendication 5, **caractérisé par le fait que** la rainure (6) présente une profondeur décroissante aussi bien dans sa zone d'applique (24) que dans sa zone circonférentielle (25) et déploie ainsi, vu dans la direction provenant de ladite zone d'applique (24), un effet de clavette croissant.

7. Dispositif de serrage selon la revendication 5 ou 6, **caractérisé par le fait que** les corps roulants (11) sont disposés dans une cage de roulement (22) qui peut être soumise à un couple externe de sorte que la cage de roulement (22) chasse les corps roulants (11) dans la fente en coin et/ou hors de la fente en coin, dans lequel il est prévu de préférence que la cage de roulement (22) présente une collerette (23) qui fait saillie vers l'extérieur dans une zone située à l'extérieur de la zone qui se trouve entre le corps de base (2) et le corps interchangeable (1).

8. Dispositif de serrage selon la revendication 7, **caractérisé par le fait que** l'une des deux faces qui forment la fente en coin est ledit anneau (12) qui est logé de manière mobile en rotation, régulièrement au moyen d'un palier à roulement (13), sur le corps de base (2) proprement dit ou - de préférence - sur le corps interchangeable (1) proprement dit, et qui est mobil en rotation aussi bien par rapport au corps de base qu'au corps interchangeable (1) de telle manière que l'anneau (12) tourne lorsque les corps roulants (11), entraînés par la cage de roulement (22), roulent sur celui-ci.

9. Dispositif de serrage selon l'une quelconque des revendications précédentes, **caractérisé par le fait que** ledit corps interchangeable (1) présente un accouplement à friction (8, 9, 27) qui est apte à être actionné par des forces axiales et au moyen duquel la pièce proprement dite, de préférence un mandrin de serrage d'outil ou un outil muni d'une tige de serrage ou d'un perçage de serrage, peut être serrée sur le corps interchangeable, dans lequel, de préférence, ledit accouplement à friction (8, 9, 27) est un accouplement conique ayant une pince de serrage (27) ou un cône de serrage (9) qui est déplacé(e) contre une douille de serrage (8) formée sur le corps interchangeable (1) au moyen d'un organe de traction/pression (14) d'un entraînement linéaire (20) intégré au moins en partie au corps de base, de préférence sous forme d'un vérin pneumatique.

10. Dispositif de serrage selon la revendication 9, **caractérisé par le fait que** ledit organe de traction/pression (14) comprend deux parties qui, quant à elles, peuvent être reliées entre elles et séparées l'une de l'autre au moyen d'un accouplement (15).

11. Dispositif de serrage selon la revendication 10, **caractérisé par le fait que** la zone dans laquelle le corps de base (2) et le corps interchangeable (1) sont accouplés l'un à l'autre de manière coaxiale et sous contrainte radiale au moyen des corps roulants (11) présente une cavité intérieure qui est traversée par ledit organe de traction/pression (14), ladite cavité recevant de préférence l'accouplement (15) de l'organe de traction/pression (14).

12. Système de dispositif de serrage comprenant un dispositif de serrage selon l'une quelconque des revendications précédentes, **caractérisé par le fait qu'**au moins un corps de base (2) et une pluralité de corps interchangeables (1) sont prévus qui, selon les besoins, peuvent être reliés audit au moins un corps de base (2).
